# EUROPÄISCHE PATENTANMELDUNG

(11) **EP 3 866 312 A1**
(43) Veröffentlichungstag der Anmeldung: **18.08.2021**
(21) Anmeldenummer: 20157349.0
(22) Anmeldetag: 14.02.2020
(51) Int. Cl.: H02K 5/22, H02K 7/14, H02K 11/33, B24B 23/02

(54) **HANDGEFÜHRTES BEARBEITUNGSGERÄT UND VERFAHREN ZUR HERSTELLUNG EINES HANDGEFÜHRTEN BEARBEITUNGSGERÄTS**

(71) Anmelder: Andreas Stihl AG & Co. KG, 71336 Waiblingen (DE)
(72) Erfinder: Failenschmid, Martin, 70329 Stuttgart (DE)
(74) Vertreter: Patentanwälte Ruff, Wilhelm, Beier, Dauster & Partner mbB

(57) **Zusammenfassung**

Die Erfindung bezieht sich auf ein handgeführtes Bearbeitungsgerät (1), wobei das Bearbeitungsgerät (1) aufweist:
- ein Elektroantriebsmotorsystem (2), wobei das Elektroantriebsmotorsystem (2) ein erstes Leistungsteil (3) und ein zweites Leistungsteil (4) aufweist, wobei das erste Leistungsteil (3) mindestens einen ersten Leistungsverbinder (5) aufweist und wobei das zweite Leistungsteil (4) mindestens einen zweiten Leistungsverbinder (6) aufweist, wobei der erste Leistungsverbinder (5) und der zweite Leistungsverbinder (6) zur elektrischen Verbindung miteinander zur Übertragung elektrischer Antriebsleistung ausgebildet sind, und
- ein Gerätegehäuse (7), wobei das Gerätegehäuse (7) ein erstes Gehäuseteil (8) und ein zweites Gehäuseteil (9) aufweist, wobei das erste Gehäuseteil (8) und das erste Leistungsteil (3) miteinander mechanisch verbunden sind und wobei das zweite Gehäuseteil (9) und das zweite Leistungsteil (4) miteinander mechanisch verbunden sind, wobei das erste Gehäuseteil (8) mit dem mechanisch verbundenen ersten Leistungsteil (3) und das zweite Gehäuseteil (9) mit dem mechanisch verbundenen zweiten Leistungsteil (4) zur mechanischen Verbindung miteinander zur Anordnung des Elektroantriebsmotorsystems (2) in dem Gerätegehäuse (7) ausgebildet sind,
- wobei der erste Leistungsverbinder (5) in Bezug auf das erste Gehäuseteil (8) derart festgehalten ist und wobei der zweite Leistungsverbinder (6) in Bezug auf das zweite Gehäuseteil (9) derart festgehalten ist, dass durch Anordnung des ersten Gehäuseteils (8) mit dem mechanisch verbundenen ersten Leistungsteil (3) und des zweiten Gehäuseteils (9) mit dem mechanisch verbundenen zweiten Leistungsteil (4) aneinander zur mechanischen Verbindung miteinander der erste Leistungsverbinder (5) und der zweite Leistungsverbinder (6) beieinander angeordnet sind, und
- wobei das Elektroantriebsmotorsystem (2) mindestens ein Fixierungselement (10) aufweist, wobei das Fixierungselement (10) zwischen einer Freigabestellung (FG) zur Freigabe der Anordnung des ersten Leistungsverbinders (5) und des zweiten Leistungsverbinders (6) beieinander und einer Fixierungsstellung (SI) zur Fixierung der elektrischen Verbindung des ersten Leistungsverbinders (5) und des zweiten Leistungsverbinders (6) miteinander verstellbar ausgebildet ist.

## Beschreibung

### ANWENDUNGSGEBIET UND STAND DER TECHNIK

Die Erfindung bezieht sich auf ein handgeführtes Bearbeitungsgerät und ein Verfahren zur Herstellung eines solchen handgeführten Bearbeitungsgeräts.

### AUFGABE UND LÖSUNG

Der Erfindung liegt als Aufgabe die Bereitstellung eines handgeführten Bearbeitungsgeräts und eines Verfahrens zur Herstellung eines solchen handgeführten Bearbeitungsgeräts zugrunde, das jeweils verbesserte Eigenschaften aufweist.

Die Erfindung löst diese Aufgabe durch die Bereitstellung eines handgeführten Bearbeitungsgeräts mit den Merkmalen des Anspruchs 1. Des Weiteren wird die der Erfindung zugrundeliegende Aufgabe durch ein Verfahren mit den Merkmalen des Anspruchs 15 gelöst. Vorteilhafte Weiterbildungen und/oder Ausgestaltungen der Erfindung sind in den abhängigen Ansprüchen beschrieben.

Das erfindungsgemäße handgeführte Bearbeitungsgerät umfasst bzw. weist ein Elektroantriebsmotorsystem und ein Gerätegehäuse auf. Das Elektroantriebsmotorsystem umfasst bzw. weist ein, insbesondere elektrisches, erstes Leistungsteil und ein, insbesondere elektrisches und/oder von dem ersten Leistungsteil verschiedenes, zweites Leistungsteil auf. Das erste Leistungsteil umfasst bzw. weist mindestens einen, insbesondere mechanischen, ersten Leistungsverbinder auf. Das zweite Leistungsteil umfasst bzw. weist mindestens einen, insbesondere mechanischen und/oder von dem ersten Leistungsverbinder verschiedenen, zweiten Leistungsverbinder auf. Der erste Leistungsverbinder und der zweite Leistungsverbinder sind zur, insbesondere mittelbaren oder unmittelbaren und/oder, insbesondere zerstörungsfrei, lösbaren, elektrischen Verbindung, insbesondere elektrischen Kontaktierung, miteinander zur Übertragung elektrischer Antriebsleistung ausgebildet bzw. konfiguriert. Das Gerätegehäuse umfasst bzw. weist ein erstes Gehäuseteil und ein zweites Gehäuseteil auf. Das erste Gehäuseteil und das erste Leistungsteil sind, insbesondere unmittelbar, miteinander mechanisch verbunden bzw. vormontiert. Das zweite Gehäuseteil und das zweite Leistungsteil sind, insbesondere unmittelbar, miteinander mechanisch verbunden bzw. vormontiert. Des Weiteren sind das erste Gehäuseteil mit dem mechanisch verbundenen ersten Leistungsteil und das zweite Gehäuseteil mit dem mechanisch verbundenen zweiten Leistungsteil zur, insbesondere unmittelbaren und/oder, insbesondere zerstörungsfrei, lösbaren, mechanischen Verbindung bzw. Montage miteinander zur, insbesondere mindestens teilweisen, insbesondere vollständigen, Anordnung bzw. Aufnahme bzw. Umgebung des Elektroantriebsmotorsystems in dem Gerätegehäuse ausgebildet bzw. konfiguriert. Außerdem ist der erste Leistungsverbinder in Bezug auf das erste Gehäuseteil, insbesondere an dem ersten Gehäuseteil, derart festgehalten, insbesondere ortsfest gehalten und/oder befestigt, und der zweite Leistungsverbinder ist in Bezug auf das zweite Gehäuseteil, insbesondere an dem zweiten Gehäuseteil, derart festgehalten, insbesondere ortsfest gehalten und/oder befestigt, dass, insbesondere nur, durch Anordnung bzw. Fügung des ersten Gehäuseteils mit dem mechanisch verbundenen ersten Leistungsteil und des zweiten Gehäuseteils mit dem mechanisch verbundenen zweiten Leistungsteil aneinander zur mechanischen Verbindung miteinander der erste Leistungsverbinder und der zweite Leistungsverbinder beieinander angeordnet sind. Weiter umfasst bzw. weist das Elektroantriebsmotorsystem mindestens ein, insbesondere mechanisches, Fixierungselement bzw. ein Sicherungselement auf. Das Fixierungselement ist zwischen, insbesondere von, einer Freigabestellung zur Freigabe der Anordnung des ersten Leistungsverbinders und des zweiten Leistungsverbinders beieinander und, insbesondere zu, einer, insbesondere von der Freigabestellung verschieden, Fixierungsstellung bzw. Sicherungsstellung zur, insbesondere unmittelbaren, Fixierung bzw. Sicherung der elektrischen Verbindung des ersten Leistungsverbinders und des zweiten Leistungsverbinders miteinander, insbesondere unmittelbar, verstellbar, insbesondere benutzerverstellbar, ausgebildet bzw. konfiguriert.

Dies, insbesondere die Anordnung des ersten Leistungsverbinders und des zweiten Leistungsverbinders beieinander durch die Anordnung des ersten Gehäuseteils und des zweiten Gehäuseteils aneinander, ermöglicht eine einfache und/oder sichere Herstellung bzw. Montage des Bearbeitungsgeräts. Zusätzlich ermöglicht dies, insbesondere das Fixierungselement, eine sichere Übertragung elektrischer Antriebsleistung und/oder einen geringen Übergangswiderstand.

Insbesondere kann das handgeführte (Englisch: hand-held) Bearbeitungsgerät ein handgetragenes (Englisch: hand-portable) Bearbeitungsgerät sein. Zusätzlich oder alternativ kann handgeführtes, insbesondere handgetragenes, Bearbeitungsgerät bedeuten, dass das Bearbeitungsgerät eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen kann. Weiter zusätzlich oder alternativ kann das Bearbeitungsgerät ein Garten-, Forst- und/oder Baubearbeitungsgerät sein. Insbesondere kann das Garten-, Forst- und/oder Baubearbeitungsgerät eine Säge, ein Freischneider oder ein Trennschleifer sein.

Das Bearbeitungsgerät kann ein Bearbeitungswerkzeug aufweisen, wobei das Elektroantriebsmotorsystem zum Antrieb des Bearbeitungswerkzeugs, insbesondere durch die elektrische Verbindung des ersten Leistungsverbinders und des zweiten Leistungsverbinders miteinander, ausgebildet sein kann.

Der erste Leistungsverbinder und der zweite Leistungsverbinder können jeweils als Motorphase bezeichnet werden. Zusätzlich oder alternativ können der erste Leistungsverbinder und der zweite Leistungsverbinder für einen maximalen Betriebsstrom von minimal 25 Ampere (A), insbesondere von minimal 50 A, und/oder von maximal 200 A, insbesondere von maximal 150 A, insbesondere von 100 A, ausgebildet sein. Weiter zusätzlich oder alternativ kann das Elektroantriebsmotorsystem ein weiteres Leistungsteil aufweisen.

Das Gerätegehäuse kann ein weiteres Gehäuseteil aufweisen. Zusätzlich oder alternativ kann das Gerätegehäuse ein Außengehäuse und/oder geschlossen sein. Weiter zusätzlich oder alternativ kann das erste Gehäuseteil ein erstes Außengehäuseteil und/oder eine erste Gehäuseschale und/oder das zweite Gehäuseteil kann ein zweites Außengehäuseteil und/oder eine zweite Gehäuseschale sein.

Ohne die bzw. zeitlich vor der Anordnung des ersten Gehäuseteils und des zweiten Gehäuseteils aneinander brauchen oder können der erste Leistungsverbinder und der zweite Leistungsverbinder nicht miteinander elektrisch verbunden und/oder beieinander angeordnet sein. Zusätzlich oder alternativ kann beieinander angeordnet maximal 5 Millimeter (mm), insbesondere maximal 2 mm, insbesondere maximal 1 mm, insbesondere 0 mm, voneinander entfernt angeordnet bedeuten. Weiter zusätzlich oder alternativ können der erste Leistungsverbinder und der zweite Leistungsverbinder, insbesondere nur, durch die und/oder zeitlich nach der Anordnung des ersten Gehäuseteils und des zweiten Gehäuseteils aneinander miteinander elektrisch verbunden sein.

Der erste Leistungsverbinder und der zweite Leistungsverbinder können, insbesondere nur, durch die Verstellung des Fixierungselements zwischen der Freigabestellung und der Fixierungsstellung miteinander elektrisch verbunden sein. Zusätzlich oder alternativ brauchen oder können ohne die bzw. zeitlich vor der Verstellung des Fixierungselements zwischen der Freigabestellung und der Fixierungsstellung der erste Leistungsverbinder und der zweite Leistungsverbinder nicht miteinander elektrisch verbunden sein. Weiter zusätzlich oder alternativ braucht oder kann das Fixierungselement in der Fixierungsstellung die Anordnung des ersten Leistungsverbinders und des zweiten Leistungsverbinders beieinander nicht freigeben. Weiter zusätzlich oder alternativ kann das Fixierungselement von der Fixierungsstellung zu der Freigabestellung, insbesondere zerstörungsfrei, verstellbar, insbesondere benutzerverstellbar, ausgebildet sein. Weiter zusätzlich oder alternativ kann das erste Leistungsteil und/oder das zweite Leistungsteil das Fixierungselement aufweisen.

In einer Weiterbildung der Erfindung ist der erste Leistungsverbinder derart festgehalten und der zweite Leistungsverbinder ist derart festgehalten, dass, insbesondere nur, durch die Anordnung des ersten Gehäuseteils und des zweiten Gehäuseteils aneinander der erste Leistungsverbinder und der zweite Leistungsverbinder in Berührung miteinander und/oder jeweils in Berührung mit dem Fixierungselement angeordnet sind. Zusätzlich oder alternativ ist der erste Leistungsverbinder derart festgehalten und der zweite Leistungsverbinder ist derart festgehalten, dass, insbesondere nur, durch die Verstellung des Fixierungselements zwischen der Freigabestellung und der Fixierungsstellung der erste Leistungsverbinder und der zweite Leistungsverbinder in Berührung miteinander und/oder jeweils in Berührung mit dem Fixierungselement angeordnet sind. Dies ermöglicht eine besonders einfache und/oder besonders sichere Herstellung des Bearbeitungsgeräts. Insbesondere können der erste Leistungsverbinder und der zweite Leistungsverbinder mittels des Fixierungselements miteinander elektrisch verbunden sein. Zusätzlich oder alternativ kann das Fixierungselement in der Fixierungsstellung den ersten Leistungsverbinder und/oder den zweiten Leistungsverbinder berühren. Weiter zusätzlich oder alternativ kann das Fixierungselement in der Fixierungsstellung die elektrische Verbindung durch einen Kraftschluss und/oder einen Formschluss fixieren. Weiter zusätzlich oder alternativ braucht oder kann die Anordnung des ersten Leistungsverbinders und des zweiten Leistungsverbinders beieinander und/oder die elektrische Verbindung des ersten Leistungsverbinders und des zweiten Leistungsverbinders miteinander nicht eine Steckverbindung sein.

In einer Weiterbildung der Erfindung ist das Fixierungselement zu der Verstellung zwischen der Freigabestellung und der Fixierungsstellung nicht durch die Anordnung des ersten Gehäuseteils und des zweiten Gehäuseteils aneinander und/oder des ersten Leistungsverbinders und des zweiten Leistungsverbinders beieinander ausgebildet bzw. konfiguriert.

Insbesondere braucht oder kann das Fixierungselement nicht ein Schnappelement aufweisen.

In einer Weiterbildung der Erfindung weist das Fixierungselement eine Schraube auf, insbesondere ist das Fixierungselement eine Schraube. Dies ermöglicht eine besonders sichere Übertragung elektrischer Antriebsleistung und/oder einen besonders geringen Übergangswiderstand.

In einer Weiterbildung der Erfindung weist der erste Leistungsverbinder Einführungszinken zur Aufnahme eines Teils des Fixierungselements in der Freigabestellung, insbesondere bei der Anordnung, auf. Zusätzlich oder alternativ weist der zweite Leistungsverbinder Einführungszinken zur Aufnahme eines Teils des Fixierungselements in der Freigabestellung, insbesondere bei der Anordnung, auf. Dies ermöglicht eine besonders einfache und/oder besonders sichere Herstellung des Bearbeitungsgeräts.

In einer Weiterbildung der Erfindung sind der erste Leistungsverbinder und das Fixierungselement derart ausgebildet bzw. konfiguriert, dass der, insbesondere angeordnete, erste Leistungsverbinder und das Fixierungselement in der Fixierungsstellung durch einen Formschluss, insbesondere unmittelbar miteinander, gegen Lösen voneinander gesichert sind. Zusätzlich oder alternativ sind der zweite Leistungsverbinder und das Fixierungselement derart ausgebildet bzw. konfiguriert, dass der, insbesondere angeordnete, zweite Leistungsverbinder und das Fixierungselement in der Fixierungsstellung durch einen Formschluss, insbesondere unmittelbar miteinander, gegen Lösen voneinander gesichert sind. Dies ermöglicht eine besonders sichere Übertragung elektrischer Antriebsleistung.

In einer Weiterbildung der Erfindung weist das Gerätegehäuse eine verschließbare, insbesondere benutzerverschließbare, Zugangsöffnung zur elektrischen Verbindung des ersten Leistungsverbinders und des zweiten Leistungsverbinders miteinander und/oder zu der Verstellung des Fixierungselements, insbesondere bei aneinander angeordneten ersten Gehäuseteil und zweiten Gehäuseteil, auf. Insbesondere kann das Gerätegehäuse ein drittes Gehäuseteil, insbesondere einen Deckel, zum Verschluss der Zugangsöffnung aufweisen. Zusätzlich oder alternativ kann die Zugangsöffnung eine Außenzugangsöffnung sein.

In einer Weiterbildung der Erfindung sind das erste Gehäuseteil und das zweite Gehäuseteil zu der Anordnung aneinander in einer Anordnungsrichtung ausgebildet bzw. konfiguriert. Zusätzlich ist das Fixierungselement zwischen der Freigabestellung und der Fixierungsstellung in einer zu der Anordnungsrichtung nicht-parallelen, insbesondere orthogonalen, Verstellungsrichtung verstellbar ausgebildet bzw. konfiguriert. Weiter zusätzlich oder alternativ weisen der erste Leistungsverbinder eine, insbesondere ebene, erste Kontaktfläche und der zweite Leistungsverbinder eine, insbesondere ebene, zweite Kontaktfläche zur elektrischen Verbindung, insbesondere unmittelbar, miteinander auf. Der erste Leistungsverbinder ist mit der ersten Kontaktfläche nicht-orthogonal, insbesondere parallel, zu der Anordnungsrichtung ausgerichtet und der zweite Leistungsverbinder ist mit der zweiten Kontaktfläche nicht-orthogonal, insbesondere parallel, zu der Anordnungsrichtung ausgerichtet. Dies ermöglicht eine einfache Verstellung des Fixierungselements und/oder eine einfache Anordnung des ersten Leistungsverbinders und des zweiten Leistungsverbinders beieinander.

In einer Ausgestaltung der Erfindung ist der erste Leistungsverbinder mit der ersten Kontaktfläche derart ausgerichtet und der zweite Leistungsverbinder ist mit der zweiten Kontaktfläche derart ausgerichtet, dass, insbesondere nur, durch die Anordnung des ersten Gehäuseteils und des zweiten Gehäuseteils aneinander die erste Kontaktfläche und die zweite Kontaktfläche in einer zu der Anordnungsrichtung nicht-orthogonalen, insbesondere parallelen, Überlappungsrichtung, insbesondere parallel zueinander, überlappen. Dies ermöglicht eine besonders gute, insbesondere sicherere, elektrische Verbindung und somit eine besonders gute, insbesondere sichere, Übertragung elektrischer Antriebsleistung. Insbesondere können die erste Kontaktfläche und die zweite Kontaktfläche in der Verstellungsrichtung hintereinander angeordnet sein.

In einer Weiterbildung der Erfindung weist der erste Leistungsverbinder eine erste Kontaktzunge auf, insbesondere ist der erste Leistungsverbinder eine erste Kontaktzunge. Zusätzlich oder alternativ weist der zweite Leistungsverbinder eine zweite Kontaktzunge auf, insbesondere ist der zweite Leistungsverbinder eine zweite Kontaktzunge. Dies ermöglicht eine einfache Anordnung des ersten Leistungsverbinders und des zweiten Leistungsverbinders beieinander und/oder eine einfache elektrische Verbindung des ersten Leistungsverbinders und des zweiten Leistungsverbinders miteinander und/oder eine einfache Fixierung der elektrischen Verbindung.

In einer Weiterbildung der Erfindung umfasst bzw. weist das Bearbeitungsgerät ein, insbesondere elektrisches, Sensorsystem auf. Das Sensorsystem umfasst bzw. weist ein, insbesondere elektrisches, erstes Sensorteil und ein, insbesondere elektrisches und/oder von dem ersten Sensorteil verschiedenes, zweites Sensorteil auf. Das erste Sensorteil umfasst bzw. weist mindestens einen, insbesondere mechanischen, ersten Sensorverbinder auf. Das zweite Systemteil umfasst bzw. weist mindestens einen, insbesondere mechanischen und/oder von dem ersten Sensorverbinder verschiedenen, zweiten Sensorverbinder auf. Der erste Sensorverbinder und der zweite Sensorverbinder sind zur, insbesondere mittelbaren oder unmittelbaren und/oder, insbesondere zerstörungsfrei, lösbaren, elektrischen Verbindung, insbesondere elektrischen Kontaktierung, miteinander zur Übertragung eines elektrischen Sensorsignals ausgebildet bzw. konfiguriert. Das erste Gehäuseteil und das erste Sensorteil sind, insbesondere unmittelbar, miteinander mechanisch verbunden bzw. vormontiert. Das zweite Gehäuseteil und das zweite Sensorteil sind, insbesondere unmittelbar, miteinander mechanisch verbunden bzw. vormontiert. Des Weiteren sind das erste Gehäuseteil mit dem mechanisch verbundenen ersten Sensorteil und das zweite Gehäuseteil mit dem mechanisch verbundenen zweiten Sensorteil zur mechanischen Verbindung miteinander zur, insbesondere mindestens teilweisen, insbesondere vollständigen, Anordnung bzw. Aufnahme bzw. Umgebung des Sensorsystems in dem Gerätegehäuse ausgebildet bzw. konfiguriert. Außerdem ist der erste Sensorverbinder in Bezug auf das erste Gehäuseteil, insbesondere an dem ersten Gehäuseteil, derart festgehalten, insbesondere ortsfest gehalten und/oder befestigt, und der zweite Sensorverbinder ist in Bezug auf das zweite Gehäuseteil, insbesondere an dem zweiten Gehäuseteil, derart festgehalten, insbesondere ortsfest gehalten und/oder befestigt, dass, insbesondere nur, durch die Anordnung des ersten Gehäuseteils mit dem mechanisch verbundenen ersten Sensorteil und des zweiten Gehäuseteils mit dem mechanisch verbundenen zweiten Sensorteil aneinander zur mechanischen Verbindung miteinander der erste Sensorverbinder und der zweite Sensorverbinder beieinander angeordnet sind. Dies ermöglicht eine einfache und/oder sichere Herstellung des Bearbeitungsgeräts. Insbesondere kann das Sensorsystem zur Aufnahme einer Messgröße des Elektroantriebsmotorsystems und/oder des Bearbeitungswerkzeugs, soweit vorhanden, insbesondere durch die elektrische Verbindung des ersten Sensorverbinders und des zweiten Sensorverbinders miteinander, ausgebildet sein. Insbesondere kann das Sensorsystem ein Temperatursensorsystem und/oder ein Ölsensorsystem sein. Zusätzlich oder alternativ kann das Sensorsystem ein weiteres Sensorteil aufweisen. Ohne die bzw. zeitlich vor der Anordnung des ersten Gehäuseteils und des zweiten Gehäuseteils aneinander brauchen oder können der erste Sensorverbinder und der zweite Sensorverbinder nicht miteinander elektrisch verbunden und/oder beieinander angeordnet sein. Weiter zusätzlich oder alternativ können der erste Sensorverbinder und der zweite Sensorverbinder, insbesondere nur, durch die und/oder zeitlich nach der Anordnung des ersten Gehäuseteils und des zweiten Gehäuseteils aneinander miteinander elektrisch verbunden sein. Weiter zusätzlich oder alternativ braucht oder kann die Anordnung des ersten Sensorverbinders und des zweiten Sensorverbinders beieinander und/oder die elektrische Verbindung des ersten Sensorverbinders und des zweiten Sensorverbinders miteinander eine Steckverbindung sein.

In einer Weiterbildung, insbesondere eines Ausgestaltung, der Erfindung umfasst bzw. weist das erste Leistungsteil einen Elektromotor auf. Zusätzlich oder alternativ umfasst bzw. weist das zweite Leistungsteil eine Motorsteuerungselektronik und/oder eine Leistungselektronik, insbesondere einen Umrichter und/oder mindestens einen Leistungsschalter, insbesondere einen Leistungstransistor, und/oder eine Leistungsquellenschnittstelle, insbesondere eine Akkuschnittstelle, zur elektrischen Verbindung, insbesondere elektrischen Kontaktierung, mit einer, insbesondere externen, Leistungsquelle, insbesondere eines Akkupacks, zur Versorgung des Bearbeitungsgeräts mit elektrischer Antriebsleistung auf. Weiter zusätzlich oder alternativ umfasst bzw. weist das erste Sensorteil, soweit vorhanden, ein Sensorelement zur Aufnahme einer, insbesondere physikalischen, Messgröße, insbesondere eines Werts der Messgröße, auf. Weiter zusätzlich oder alternativ umfasst bzw. weist das zweite Sensorteil, soweit vorhanden, eine Sensorelektronik zur Verarbeitung, insbesondere Weiterverarbeitung, eines, insbesondere des, elektrischen Sensorsignals auf. Insbesondere kann das Sensorsignal eine Information über die Messgröße aufweisen.

In einer Weiterbildung der Erfindung besteht das erste Gehäuseteil zu minimal 50 Prozent (%), insbesondere 100 %, aus Metall. Zusätzlich oder alternativ besteht das zweite Gehäuseteil zu minimal 50 %, insbesondere 100 %, aus, elektrisch isolierendem, Kunststoff. Dies, insbesondere Metall, ermöglicht eine hohe Festigkeit, insbesondere und somit eine gute Befestigung des Elektromotors, soweit vorhanden. Zusätzlich oder alternativ ermöglicht dies, insbesondere Kunststoff, eine gute Isolierung der Motorsteuerungselektronik und/oder der Leistungselektronik und/oder der Leistungsquellenschnittstelle, soweit vorhanden, und/oder ein niedriges Gewicht.

In einer Weiterbildung der Erfindung sind das erste Gehäuseteil und das zweite Gehäuseteil zu der Anordnung aneinander in einer zu einer Längsachse des Bearbeitungsgeräts nicht-parallelen, insbesondere orthogonalen, Anordnungsrichtung ausgebildet bzw. konfiguriert. Dies ermöglicht eine besonders einfache Herstellung des Bearbeitungsgeräts. Insbesondere kann die Längsachse einer Längsachse des Bearbeitungswerkzeugs, soweit vorhanden, entsprechen, insbesondere gleichen.

Das erfindungsgemäße Verfahren zur Herstellung bzw. Montage eines, insbesondere des, handgeführten Bearbeitungsgeräts wie zuvor beschrieben umfasst bzw. weist die Schritte auf: a) Anordnen des ersten Gehäuseteils mit dem mechanisch verbundenen ersten Leistungsteil und des zweiten Gehäuseteils mit dem mechanisch verbundenen zweiten Leistungsteil aneinander. b) Verstellen des Fixierungselements zwischen der Freigabestellung und der Fixierungsstellung. Insbesondere kann der Schritt b) nicht zeitlich vor dem Schritt a) ausgeführt werden. Zusätzlich oder alternativ kann der Schritt b) zeitlich nach dem Schritt a) ausgeführt werden. Weiter zusätzlich oder alternativ kann das Verfahren weitere Schritte aufweisen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein erfindungsgemäßes handgeführtes Bearbeitungsgerät zeitlich vor einer Anordnung eines ersten Gehäuseteils und eines zweiten Gehäuseteils aneinander,
- Fig. 2: das Bearbeitungsgerät der Fig. 1 bei der Anordnung bzw. einem Anordnen des ersten Gehäuseteils und des zweiten Gehäuseteils aneinander eines erfindungsgemäßen Verfahrens zur Herstellung des Bearbeitungsgeräts,
- Fig. 3: das Bearbeitungsgerät der Fig. 1 zeitlich nach der Anordnung des ersten Gehäuseteils und des zweiten Gehäuseteils aneinander und zeitlich vor einer Verstellung eines Fixierungselements zwischen einer Freigabestellung und einer Fixierungsstellung,
- Fig. 4: das Bearbeitungsgerät der Fig. 1 bei der Verstellung bzw. einem Verstellen des Fixierungselements zwischen der Freigabestellung und der Fixierungsstellung des Verfahrens zur Herstellung des Bearbeitungsgeräts,
- Fig. 5: das Bearbeitungsgerät der Fig. 1 zeitlich nach der Verstellung des Fixierungselements zwischen der Freigabestellung und der Fixierungsstellung,
- Fig. 6: eine Vorderansicht des Bearbeitungsgeräts der Fig. 1 mit einer Zugangsöffnung geöffnet,
- Fig. 7: eine Vorderansicht des Bearbeitungsgeräts der Fig. 1 mit der Zugangsöffnung verschlossen,
- Fig. 8: eine Seitenansicht des Bearbeitungsgeräts der Fig. 1,
- Fig. 9: schematisch das Bearbeitungsgerät der Fig. 1 zeitlich vor der Anordnung des ersten Gehäuseteils und des zweiten Gehäuseteils aneinander, und
- Fig. 10: schematisch das Bearbeitungsgerät der Fig. 1 zeitlich nach der Anordnung des ersten Gehäuseteils und des zweiten Gehäuseteils aneinander.

### DETAILLIERTE BESCHREIBUNG DER AUSFÜHRUNGSBEISPIELE

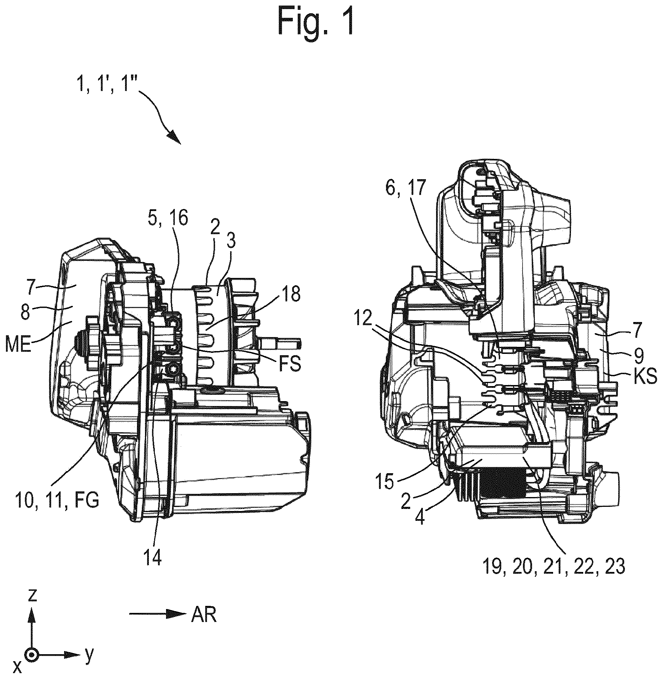

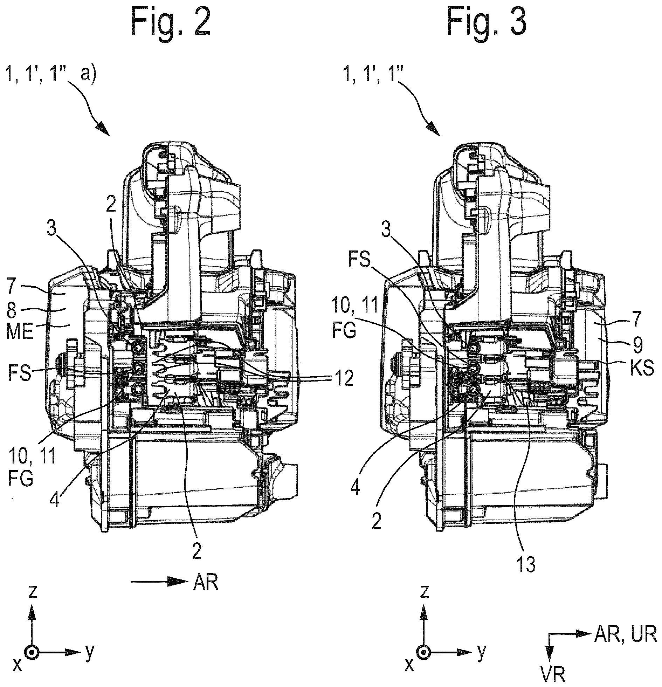

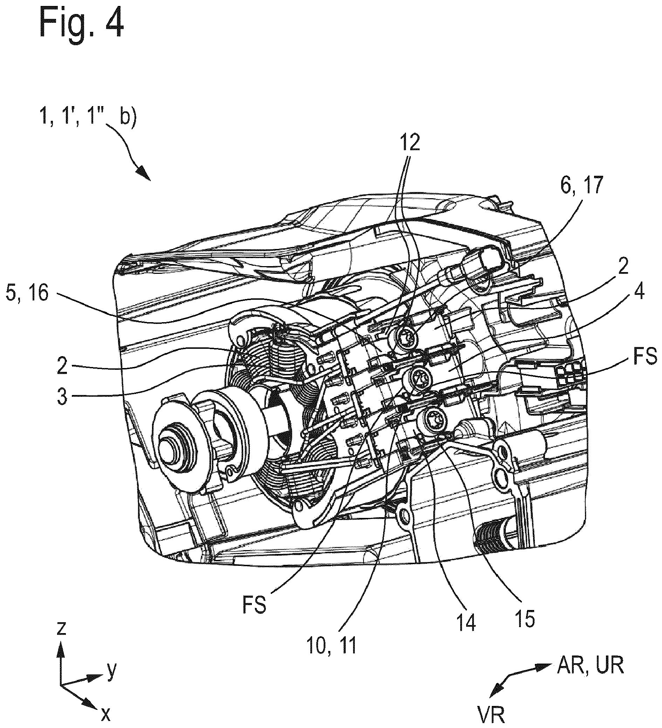

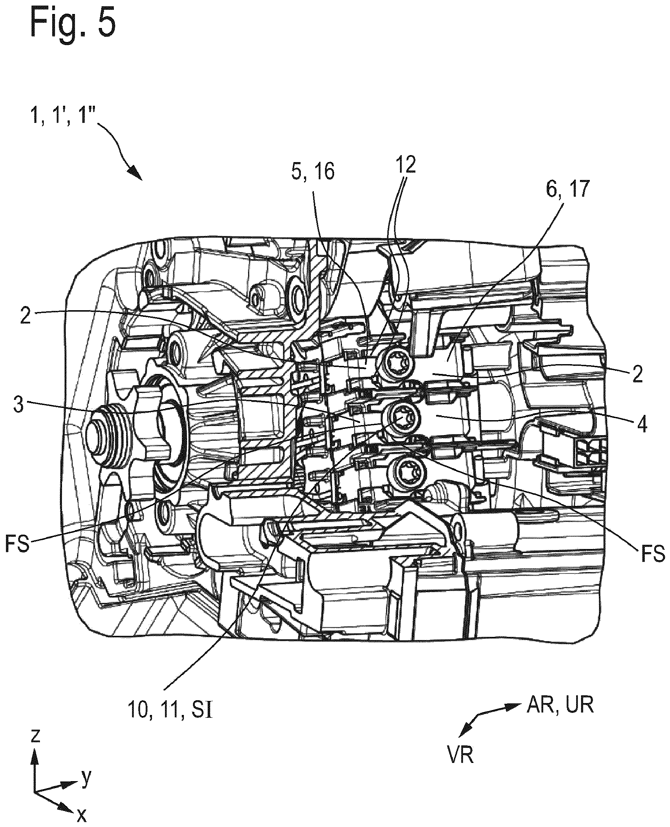

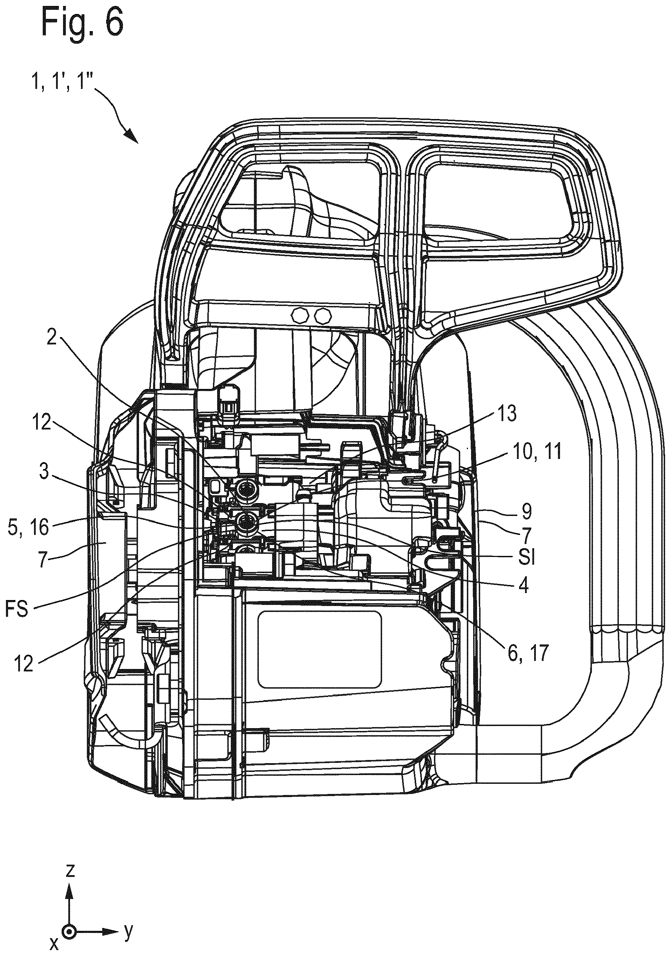

Fig. 1 bis 10 zeigen ein erfindungsgemäßes handgeführtes Bearbeitungsgerät 1. Das Bearbeitungsgerät 1 weist ein Elektroantriebsmotorsystem 2 und ein Gerätegehäuse 7 auf. Das Elektroantriebsmotorsystem 2 weist ein erstes Leistungsteil 3 und ein zweites Leistungsteil 4 auf. Das erste Leistungsteil 3 weist mindestens einen ersten Leistungsverbinder 5, in dem gezeigten Ausführungsbeispiel drei erste Leistungsverbinder 5, auf. Das zweite Leistungsteil 4 weist mindestens einen zweiten Leistungsverbinder 6, in dem gezeigten Ausführungsbeispiel drei zweite Leistungsverbinder 6, auf. Der erste Leistungsverbinder 5, in dem gezeigten Ausführungsbeispiel alle die ersten Leistungsverbinder 5, und der zweite Leistungsverbinder 6, in dem gezeigten Ausführungsbeispiel alle die zweiten Leistungsverbinder 6, sind zur, insbesondere zugeordneten bzw. paarweisen, elektrischen Verbindung miteinander zur Übertragung elektrischer Antriebsleistung ausgebildet, in Fig. 5 bis 8 elektrisch verbunden. Das Gerätegehäuse 7 weist ein erstes Gehäuseteil 8 und ein zweites Gehäuseteil 9 auf. Das erste Gehäuseteil 7 und das erste Leistungsteil 3 sind, insbesondere unmittelbar, miteinander mechanisch verbunden, wie in Fig. 1 und 2 gezeigt. Das zweite Gehäuseteil 9 und das zweite Leistungsteil 4 sind, insbesondere unmittelbar, miteinander mechanisch verbunden. Des Weiteren sind das erste Gehäuseteil 8 mit dem mechanisch verbundenen ersten Leistungsteil 3 und das zweite Gehäuseteil 9 mit dem mechanisch verbundenen zweiten Leistungsteil 4 zur, insbesondere unmittelbaren, mechanischen Verbindung miteinander zur Anordnung des Elektroantriebsmotorsystems in dem Gerätegehäuse ausgebildet, in Fig. 3 bis 8 und 10 mechanisch verbunden und angeordnet. Außerdem ist der erste Leistungsverbinder 5, in dem gezeigten Ausführungsbeispiel sind alle ersten Leistungsverbinder 5, in Bezug auf das erste Gehäuseteil 8 derart festgehalten und der zweite Leistungsverbinder 6 ist, in dem gezeigten Ausführungsbeispiel sind alle zweiten Leistungsverbinder 6, in Bezug auf das zweite Gehäuseteil 9 derart festgehalten, wie in Fig. 1 bis 6 gezeigt, dass durch Anordnung des ersten Gehäuseteils 8 mit dem mechanisch verbundenen ersten Leistungsteil 3 und des zweiten Gehäuseteils 9 mit dem mechanisch verbundenen zweiten Leistungsteil 4 aneinander zur mechanischen Verbindung miteinander der erste Leistungsverbinder 5, in dem gezeigten Ausführungsbeispiel alle die ersten Leistungsverbinder 5, und der zweite Leistungsverbinder 6, in dem gezeigten Ausführungsbeispiel alle die zweiten Leistungsverbinder 6, insbesondere zugeordnet bzw. paarweise, beieinander angeordnet sind, wie in Fig. 3 gezeigt. Weiter weist das Elektroantriebsmotorsystem 2, in dem gezeigten Ausführungsbeispiel das erste Leistungsteil 3, mindestens ein Fixierungselement 10, in dem gezeigten Ausführungsbeispiel drei Fixierungselemente 10, auf. Das Fixierungselement 10 ist, in dem gezeigten Ausführungsbeispiel sind die Fixierungselemente 10 jeweils, zwischen einer Freigabestellung FG zur Freigabe der Anordnung des, insbesondere zugeordneten, ersten Leistungsverbinders 5 und des, insbesondere zugeordneten, zweiten Leistungsverbinders 6 beieinander, wie in Fig. 1 bis 3 gezeigt, und einer Fixierungsstellung SI zur Fixierung der elektrischen Verbindung des, insbesondere zugeordneten, ersten Leistungsverbinders 5 und des, insbesondere zugeordneten, zweiten Leistungsverbinders 6 miteinander, wie in Fig. 5 und 6 gezeigt, verstellbar ausgebildet.

In dem gezeigten Ausführungsbeispiel entsprechen, insbesondere gleichen, eine Anzahl der ersten Leistungsverbinder 5 und eine Anzahl der zweiten Leistungsverbinder 6 einander. Zusätzlich entspricht, insbesondere gleicht, eine Anzahl der Fixierungselemente 10 der Anzahl der ersten Leistungsverbinder 5 und/oder der Anzahl der zweiten Leistungsverbinder 6. In alternativen Ausführungsbeispielen kann dies anders sein. Insbesondere können das erste Leistungsteil und das zweite Leistungsteil jeweils nur einen einzigen Leistungsverbinder, genau zwei Leistungsverbinder oder mindestens vier Leistungsverbinder aufweisen. Zusätzlich oder alternativ kann das Elektroantriebsmotorsystem nur ein einziges Fixierungselement, genau zwei Fixierungselemente oder mindestens vier Fixierungselemente aufweisen. Weiter zusätzlich oder alternativ braucht oder kann eine Anzahl der Fixierungselemente der Anzahl der ersten Leistungsverbinder und/oder der Anzahl der zweiten Leistungsverbinder nicht entsprechen.

Das erfindungsgemäße Verfahren zur Herstellung des handgeführten Bearbeitungsgeräts 1 weist die Schritte auf: a) Anordnen des ersten Gehäuseteils 8 mit dem mechanisch verbundenen ersten Leistungsteil 3 und des zweiten Gehäuseteils 9 mit dem mechanisch verbundenen zweiten Leistungsteil 4 aneinander, wie in Fig. 2 gezeigt. b) Verstellen des Fixierungselements 10 zwischen der Freigabestellung FG und der Fixierungsstellung SI.

Zudem weist in dem gezeigten Ausführungsbeispiel das Verfahren den Schritt auf: mechanisches Verbinden des ersten Gehäuseteils 8 und des zweiten Gehäuseteils 9 miteinander, insbesondere zeitlich nach dem Schritt a). In alternativen Ausführungsbeispielen kann das mechanische Verbinden gleichzeitig mit dem Anordnen, insbesondere durch das Anordnen, ausgeführt werden.

Des Weiteren weist in dem gezeigten Ausführungsbeispiel das Verfahren den Schritt auf: elektrisches Verbinden, insbesondere sicheres elektrisches Verbinden, des ersten Leistungsverbinders 5 und des zweiten Leistungsverbinders 6 miteinander, insbesondere durch das Verstellen des Fixierungselements 10 zwischen der Freigabestellung FG und der Fixierungsstellung SI. In alternativen Ausführungsbeispielen kann das, insbesondere sichere, elektrische Verbinden des ersten Leistungsverbinders und des zweiten Leistungsverbinders miteinander anders, insbesondere durch das Anordnen des ersten Gehäuseteils und des zweiten Gehäuseteils aneinander, ausgeführt werden.

Außerdem ist in dem gezeigten Ausführungsbeispiel das Bearbeitungsgerät 1 eine Säge 1', insbesondere eine Kettensäge 1".

Weiter weist in dem gezeigten Ausführungsbeispiel das Bearbeitungsgerät 1 ein Bearbeitungswerkzeug 30, in dem gezeigten Ausführungsbeispiel in Form eines Sägewerkwerkzeugs 30', insbesondere einer Sägekette 30", auf.

Das Elektroantriebsmotorsystem 2 ist zum Antrieb des Bearbeitungswerkzeugs 30, insbesondere durch die elektrische Verbindung des ersten Leistungsverbinders 5 und des zweiten Leistungsverbinders 6 miteinander, ausgebildet.

Im Detail ist der erste Leistungsverbinder 5 derart festgehalten und der zweite Leistungsverbinder 6 ist derart festgehalten, dass durch die Anordnung des ersten Gehäuseteils 8 und des zweiten Gehäuseteils 9 aneinander der erste Leistungsverbinder 5 und der zweite Leistungsverbinder 6 in Berührung miteinander und/oder jeweils in Berührung mit dem Fixierungselement 10 angeordnet sind.

Zusätzlich ist der erste Leistungsverbinder 5 derart festgehalten und der zweite Leistungsverbinder 6 ist derart festgehalten, dass, insbesondere spätestens, durch die Verstellung des Fixierungselements 10 zwischen der Freigabestellung FG und der Fixierungsstellung SI der erste Leistungsverbinder 5 und der zweite Leistungsverbinder 6 in Berührung miteinander und/oder jeweils in Berührung mit dem Fixierungselement 10 angeordnet sind.

Zudem ist das Fixierungselement 10 zu der Verstellung zwischen der Freigabestellung FG und der Fixierungsstellung SI nicht durch die Anordnung des ersten Gehäuseteils 8 und des zweiten Gehäuseteils 9 aneinander und/oder des ersten Leistungsverbinders 5 und des zweiten Leistungsverbinders 6 beieinander ausgebildet.

Des Weiteren weist das Fixierungselement 10 eine Schraube 11 auf, insbesondere ist das Fixierungselement 10 eine Schraube 11.

In dem gezeigten Ausführungsbeispiel weist das Verstellen des Fixierungselements 10 zwischen der Freigabestellung FG und der Fixierungsstellung SI ein Einschrauben der Schraube 11 auf, insbesondere ist ein Einschrauben.

Außerdem weist der zweite Leistungsverbinder 6, insbesondere in einer Anordnungsrichtung AR verlaufende, Einführungszinken 12 zur Aufnahme eines Teils des Fixierungselements 10, in dem gezeigten Ausführungsbeispiel eines Schafts der Schraube 11, in der Freigabestellung SI, insbesondere bei der Anordnung, auf, in Fig. 3 bis 8 aufgenommen.

Weiter weist in dem gezeigten Ausführungsbeispiel der erste Leistungsverbinder 5 ein Durchgangsloch zur Durchführung des Teils des Fixierungselements 10 in der Freigabestellung SI, insbesondere und in der Fixierungsstellung SI, auf, in Fig. 1 bis 8 durchgeführt.

In alternativen Ausführungsbeispielen kann zusätzlich oder alternativ der erste Leistungsverbinder Einführungszinken zur Aufnahme eines Teils des Fixierungselements in der Freigabestellung, insbesondere bei der Anordnung, aufweisen.

Zudem sind der erste Leistungsverbinder 5 und das Fixierungselement 10 derart ausgebildet, dass der, insbesondere angeordnete, erste Leistungsverbinder 5 und das Fixierungselement 10 in der Fixierungsstellung SI, insbesondere und in der Freigabestellung FG, durch einen Formschluss FS, in dem gezeigten Ausführungsbeispiel zwischen einem Umfangsrand des Durchgangslochs des ersten Leistungsverbinders 5 und einem Umfangsrand des Teils des Fixierungselements 10 gebildet, gegen Lösen voneinander, insbesondere entgegen der Anordnungsrichtung AR, gesichert sind.

Zusätzlich sind der zweite Leistungsverbinder 6 und das Fixierungselement 10 derart ausgebildet, dass der, insbesondere angeordnete, zweite Leistungsverbinder 6 und das Fixierungselement 10 in der Fixierungsstellung SI durch einen Formschluss FS, in dem gezeigten Ausführungsbeispiel zwischen einem, insbesondere abgebogenen, Ende eines der Einführungszinken 12 des zweiten Leistungsverbinders 6 und einem Umfangsrand eines Kopfs der Schraube 11, gegen Lösen voneinander, insbesondere entgegen der Anordnungsrichtung AR, gesichert sind.

Des Weiteren weist das Gerätegehäuse 7 eine verschließbare Zugangsöffnung 13 zur elektrischen Verbindung des ersten Leistungsverbinders 5 und des zweiten Leistungsverbinders 6 miteinander und/oder zu der Verstellung des Fixierungselements 10, insbesondere bei aneinander angeordneten ersten Gehäuseteil 8 und zweiten Gehäuseteil 9, auf, wie in Fig. 6 gezeigt.

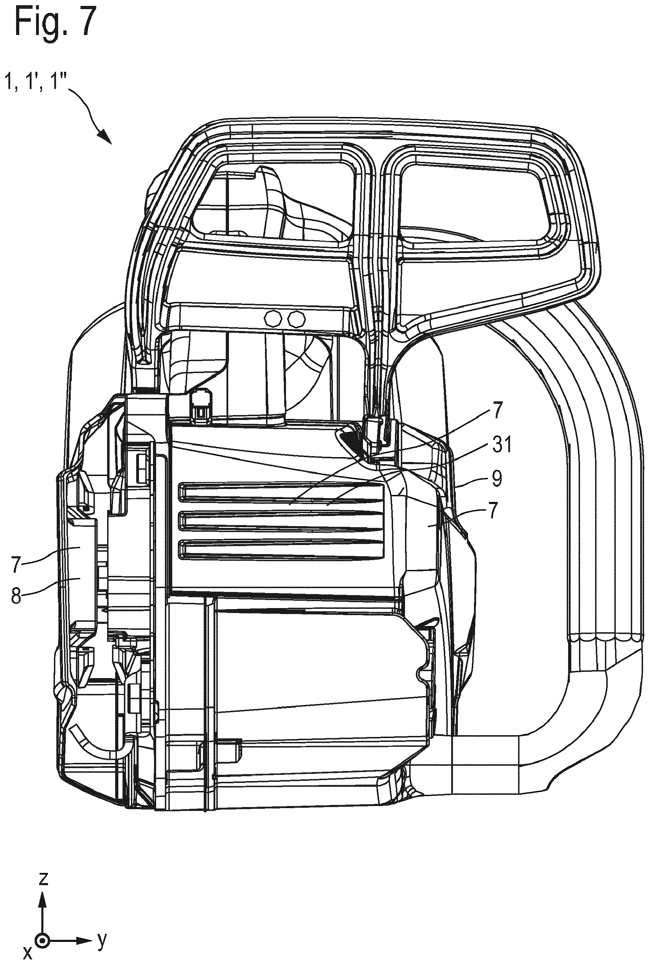

In dem gezeigten Ausführungsbeispiel weist das Gerätegehäuse 7 ein drittes Gehäuseteil 31 zum Verschluss der Zugangsöffnung 13 auf, in Fig. 7 verschließt.

Außerdem weist in dem gezeigten Ausführungsbeispiel das Verfahren den Schritt auf: Verschließen der Zugangsöffnung 13, insbesondere zeitlich nach der elektrischen Verbindung des ersten Leistungsverbinders 5 und des zweiten Leistungsverbinders 6 miteinander und/oder der Verstellung des Fixierungselements 10.

Weiter sind das erste Gehäuseteil 8 und das zweite Gehäuseteil 9 zu der Anordnung aneinander in der Anordnungsrichtung AR, in dem gezeigten Ausführungsbeispiel in Richtung y, ausgebildet.

Zusätzlich ist das Fixierungselement 10 zwischen der Freigabestellung FG und der Fixierungsstellung SI in einer zu der Anordnungsrichtung AR nicht-parallelen, insbesondere orthogonalen, Verstellungsrichtung VR, in dem gezeigten Ausführungsbeispiel in Richtung -x-z, verstellbar ausgebildet.

Weiter zusätzlich weisen der erste Leistungsverbinder 5 eine erste Kontaktfläche 14 und der zweite Leistungsverbinder 6 eine zweite Kontaktfläche 15 zur elektrischen Verbindung miteinander auf. Der erste Leistungsverbinder 5 ist mit der ersten Kontaktfläche 14 nicht-orthogonal, insbesondere parallel, zu der Anordnungsrichtung AR ausgerichtet und der zweite Leistungsverbinder 6 ist mit der zweiten Kontaktfläche 15 nicht-orthogonal, insbesondere parallel, zu der Anordnungsrichtung AR ausgerichtet.

Im Detail ist der erste Leistungsverbinder 5 mit der ersten Kontaktfläche 14 derart ausgerichtet und der zweite Leistungsverbinder 6 ist mit der zweiten Kontaktfläche 15 derart ausgerichtet, dass durch die Anordnung des ersten Gehäuseteils 8 und des zweiten Gehäuseteils 9 aneinander die erste Kontaktfläche 14 und die zweite Kontaktfläche 15 in einer zu der Anordnungsrichtung AR nicht-orthogonalen, insbesondere parallelen, Überlappungsrichtung UR, in dem gezeigten Ausführungsbeispiel in Richtung y, insbesondere parallel zueinander, überlappen.

In alternativen Ausführungsbeispielen brauchen oder können durch die Anordnung des ersten Gehäuseteils und des zweiten Gehäuseteils aneinander die erste Kontaktfläche und die zweite Kontaktfläche in der Anordnungsrichtung in Verlängerung voneinander angeordnet sein und/oder nicht überlappen. Insbesondere können der erste Leistungsverbinder und der zweite Leistungsverbinder mittels des Fixierungselements miteinander elektrisch verbunden sein.

Zudem weist der erste Leistungsverbinder 5 eine erste Kontaktzunge 16 auf, insbesondere ist der erste Leistungsverbinder 5 eine erste Kontaktzunge 16.

Zusätzlich weist der zweite Leistungsverbinder 6 eine zweite Kontaktzunge 17 auf, insbesondere ist der zweite Leistungsverbinder 6 eine zweite Kontaktzunge 17.

In dem gezeigten Ausführungsbeispiel kraftbeaufschlagt, insbesondere drückt bzw. klemmt, das Fixierungselement 10, insbesondere in Form der Schraube 11, insbesondere der Kopf der Schraube 11, in der Fixierungsstellung SI den ersten Leistungsverbinder 5, insbesondere in Form der ersten Kontaktzunge 16, insbesondere die erste Kontaktfläche 14 des ersten Leistungsverbinders 5, und den zweiten Leistungsverbinder 6, insbesondere in Form der zweiten Kontaktzunge 17, insbesondere die zweite Kontaktfläche 15 des zweiten Leistungsverbinders 6, in Berührung miteinander, insbesondere in der Verstellungsrichtung VR.

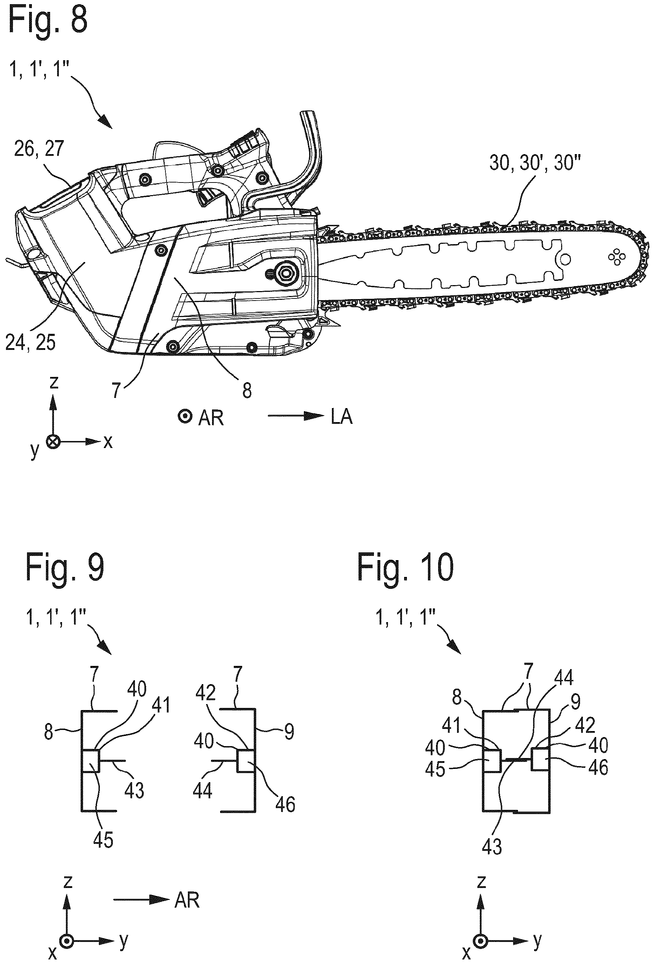

Des Weiteren sind das erste Gehäuseteil 8 und das zweite Gehäuseteil 9 zu der Anordnung aneinander in der zu einer Längsachse LA, in dem gezeigten Ausführungsbeispiel in Richtung x, des Bearbeitungsgeräts 1 nicht-parallelen, insbesondere orthogonalen, Anordnungsrichtung AR ausgebildet, wie in Fig. 8 gezeigt.

In dem gezeigten Ausführungsbeispiel ist die Anordnungsrichtung AR horizontal.

Außerdem weist das Bearbeitungsgerät 1 ein Sensorsystem 40 auf. Das Sensorsystem 40 weist ein erstes Sensorteil 41 und ein zweites Sensorteil 42 auf. Das erste Sensorteil 41 weist mindestens einen ersten Sensorverbinder 43 auf. Das zweite Systemteil 42 weist mindestens einen zweiten Sensorverbinder 44 auf. Der erste Sensorverbinder 43 und der zweite Sensorverbinder 44 sind zur elektrischen Verbindung miteinander zur Übertragung eines elektrischen Sensorsignals ausgebildet, in Fig. 10 elektrisch verbunden. Das erste Gehäuseteil 8 und das erste Sensorteil 41 sind, insbesondere unmittelbar, miteinander mechanisch verbunden, wie in Fig. 9 gezeigt. Das zweite Gehäuseteil 9 und das zweite Sensorteil 41 sind, insbesondere unmittelbar, miteinander mechanisch verbunden. Weiter sind das erste Gehäuseteil 8 mit dem mechanisch verbundenen ersten Sensorteil 41 und das zweite Gehäuseteil 9 mit dem mechanisch verbundenen zweiten Sensorteil 42 zur mechanischen Verbindung miteinander zur Anordnung des Sensorsystems 40 in dem Gerätegehäuse 7 ausgebildet, in Fig. 10 mechanisch verbunden und angeordnet. Zudem ist der erste Sensorverbinder 43 in Bezug auf das erste Gehäuseteil 8 derart festgehalten und der zweite Sensorverbinder 44 ist in Bezug auf das zweite Gehäuseteil 9 derart festgehalten, wie in Fig. 9 gezeigt, dass durch die Anordnung des ersten Gehäuseteils 8 mit dem mechanisch verbundenen ersten Sensorteil 41 und des zweiten Gehäuseteils 9 mit dem mechanisch verbundenen zweiten Sensorteil 42 aneinander zur mechanischen Verbindung miteinander der erste Sensorverbinder 43 und der zweite Sensorverbinder 44 beieinander angeordnet sind, wie in Fig. 10 gezeigt.

Des Weiteren weist in dem gezeigten Ausführungsbeispiel das Verfahren den Schritt auf: elektrisches Verbinden des ersten Sensorverbinders 43 und des zweiten Sensorverbinders 44 miteinander, insbesondere durch das Anordnen des ersten Gehäuseteils 8 und des zweiten Gehäuseteils 9 aneinander.

In alternativen Ausführungsbeispielen kann das elektrische Verbinden des ersten Sensorverbinders und des zweiten Sensorverbinders miteinander zeitlich nach dem Anordnen des ersten Gehäuseteils und des zweiten Gehäuseteils aneinander ausgeführt werden. Zusätzlich oder alternativ braucht oder kann der erste Sensorverbinder in Bezug auf das erste Gehäuseteil nicht derart festgehalten sein und/oder der zweite Sensorverbinder braucht oder kann in Bezug auf das zweite Gehäuseteil nicht derart festgehalten sein, dass durch die Anordnung des ersten Gehäuseteils und des zweiten Gehäuseteils aneinander der erste Sensorverbinder und der zweite Sensorverbinder beieinander angeordnet sind.

Außerdem weist das erste Leistungsteil 3 einen Elektromotor 18 auf.

Zusätzlich weist das zweite Leistungsteil 4 eine Motorsteuerungselektronik 19 und/oder eine Leistungselektronik 20, insbesondere einen Umrichter 21 und/oder mindestens einen Leistungsschalter 22, insbesondere einen Leistungstransistor 23, und/oder eine Leistungsquellenschnittstelle 24, insbesondere eine Akkuschnittstelle 25, zur elektrischen Verbindung mit einer Leistungsquelle 26, insbesondere eines Akkupacks 27, zur Versorgung des Bearbeitungsgeräts 1 mit elektrischer Antriebsleistung auf, in Fig. 8 elektrisch verbunden.

Weiter zusätzlich weist das erste Sensorteil 41 ein Sensorelement 45 zur Aufnahme einer Messgröße auf.

Weiter zusätzlich weist das zweite Sensorteil 42 eine Sensorelektronik 46 zur Verarbeitung des elektrischen Sensorsignals auf.

In dem gezeigten Ausführungsbeispiel weist das erste Leistungsteil 3 eine Bearbeitungswerkzeugschnittstelle zur mechanischen Verbindung mit dem Bearbeitungswerkzeug 30 zum Antrieb des Bearbeitungswerkzeugs 30 auf, in Fig. 8 mechanisch verbunden.

Weiter weist das Bearbeitungsgerät 1 eine Akkuaufnahme auf. Die Akkuaufnahme ist zum Aufnehmen des Akkupacks 27 ausgebildet, in Fig. 8 aufgenommen.

Zudem besteht das erste Gehäuseteil 8 zu minimal 50 %, insbesondere 100 %, aus Metall ME.

Zusätzlich besteht das zweite Gehäuseteil 9 zu minimal 50 %, insbesondere 100 %, aus Kunststoff KS.

Wie die gezeigten und zuvor beschriebenen Ausführungsbeispiele deutlich machen, stellt die Erfindung ein handgeführtes Bearbeitungsgerät und ein Verfahren zur Herstellung eines solchen handgeführten Bearbeitungsgeräts bereit, das verbesserte Eigenschaften aufweist.

## Patentansprüche

1. Handgeführtes Bearbeitungsgerät (1), wobei das Bearbeitungsgerät (1) aufweist:
- ein Elektroantriebsmotorsystem (2), wobei das Elektroantriebsmotorsystem (2) ein erstes Leistungsteil (3) und ein zweites Leistungsteil (4) aufweist, wobei das erste Leistungsteil (3) mindestens einen ersten Leistungsverbinder (5) aufweist und wobei das zweite Leistungsteil (4) mindestens einen zweiten Leistungsverbinder (6) aufweist, wobei der erste Leistungsverbinder (5) und der zweite Leistungsverbinder (6) zur elektrischen Verbindung miteinander zur Übertragung elektrischer Antriebsleistung ausgebildet sind, und
- ein Gerätegehäuse (7), wobei das Gerätegehäuse (7) ein erstes Gehäuseteil (8) und ein zweites Gehäuseteil (9) aufweist, wobei das erste Gehäuseteil (8) und das erste Leistungsteil (3) miteinander mechanisch verbunden sind und wobei das zweite Gehäuseteil (9) und das zweite Leistungsteil (4) miteinander mechanisch verbunden sind, wobei das erste Gehäuseteil (8) mit dem mechanisch verbundenen ersten Leistungsteil (3) und das zweite Gehäuseteil (9) mit dem mechanisch verbundenen zweiten Leistungsteil (4) zur mechanischen Verbindung miteinander zur Anordnung des Elektroantriebsmotorsystems (2) in dem Gerätegehäuse (7) ausgebildet sind,
- wobei der erste Leistungsverbinder (5) in Bezug auf das erste Gehäuseteil (8) derart festgehalten ist und wobei der zweite Leistungsverbinder (6) in Bezug auf das zweite Gehäuseteil (9) derart festgehalten ist, dass durch Anordnung des ersten Gehäuseteils (8) mit dem mechanisch verbundenen ersten Leistungsteil (3) und des zweiten Gehäuseteils (9) mit dem mechanisch verbundenen zweiten Leistungsteil (4) aneinander zur mechanischen Verbindung miteinander der erste Leistungsverbinder (5) und der zweite Leistungsverbinder (6) beieinander angeordnet sind, und
- wobei das Elektroantriebsmotorsystem (2) mindestens ein Fixierungselement (10) aufweist, wobei das Fixierungselement (10) zwischen einer Freigabestellung (FG) zur Freigabe der Anordnung des ersten Leistungsverbinders (5) und des zweiten Leistungsverbinders (6) beieinander und einer Fixierungsstellung (SI) zur Fixierung der elektrischen Verbindung des ersten Leistungsverbinders (5) und des zweiten Leistungsverbinders (6) miteinander verstellbar ausgebildet ist.

2. Handgeführtes Bearbeitungsgerät (1) nach Anspruch 1,
- wobei der erste Leistungsverbinder (5) derart festgehalten ist und wobei der zweite Leistungsverbinder (6) derart festgehalten ist, dass durch die Anordnung des ersten Gehäuseteils (8) und des zweiten Gehäuseteils (9) aneinander der erste Leistungsverbinder (5) und der zweite Leistungsverbinder (6) in Berührung miteinander und/oder jeweils in Berührung mit dem Fixierungselement (10) angeordnet sind, und/oder
- wobei der erste Leistungsverbinder (5) derart festgehalten ist und wobei der zweite Leistungsverbinder (6) derart festgehalten ist, dass durch die Verstellung des Fixierungselements (10) zwischen der Freigabestellung (FG) und der Fixierungsstellung (SI) der erste Leistungsverbinder (5) und der zweite Leistungsverbinder (6) in Berührung miteinander und/oder jeweils in Berührung mit dem Fixierungselement (10) angeordnet sind.

3. Handgeführtes Bearbeitungsgerät (1) nach einem der vorhergehenden Ansprüche,
- wobei das Fixierungselement (10) zu der Verstellung zwischen der Freigabestellung (FG) und der Fixierungsstellung (SI) nicht durch die Anordnung des ersten Gehäuseteils (8) und des zweiten Gehäuseteils (9) aneinander und/oder des ersten Leistungsverbinders (5) und des zweiten Leistungsverbinders (6) beieinander ausgebildet ist.

4. Handgeführtes Bearbeitungsgerät (1) nach einem der vorhergehenden Ansprüche,
- wobei das Fixierungselement (10) eine Schraube (11) aufweist, insbesondere eine Schraube (11) ist.

5. Handgeführtes Bearbeitungsgerät (1) nach einem der vorhergehenden Ansprüche,
- wobei der erste Leistungsverbinder Einführungszinken zur Aufnahme eines Teils des Fixierungselements in der Freigabestellung, insbesondere bei der Anordnung, aufweist, und/oder
- wobei der zweite Leistungsverbinder (6) Einführungszinken (12) zur Aufnahme eines Teils des Fixierungselements (10) in der Freigabestellung (SI), insbesondere bei der Anordnung, aufweist.

6. Handgeführtes Bearbeitungsgerät (1) nach einem der vorhergehenden Ansprüche,
- wobei der erste Leistungsverbinder (5) und das Fixierungselement (10) derart ausgebildet sind, dass der erste Leistungsverbinder (5) und das Fixierungselement (10) in der Fixierungsstellung (SI) durch einen Formschluss (FS) gegen Lösen voneinander gesichert sind, und/oder
- wobei der zweite Leistungsverbinder (6) und das Fixierungselement (10) derart ausgebildet sind, dass der zweite Leistungsverbinder (6) und das Fixierungselement (10) in der Fixierungsstellung (SI) durch einen Formschluss (FS) gegen Lösen voneinander gesichert sind.

7. Handgeführtes Bearbeitungsgerät (1) nach einem der vorhergehenden Ansprüche,
- wobei das Gerätegehäuse (7) eine verschließbare Zugangsöffnung (13) zur elektrischen Verbindung des ersten Leistungsverbinders (5) und des zweiten Leistungsverbinders (6) miteinander und/oder zu der Verstellung des Fixierungselements aufweist.

8. Handgeführtes Bearbeitungsgerät (1) nach einem der vorhergehenden Ansprüche,
- wobei das erste Gehäuseteil (8) und das zweite Gehäuseteil (9) zu der Anordnung aneinander in einer Anordnungsrichtung (AR) ausgebildet sind, und
- wobei das Fixierungselement (10) zwischen der Freigabestellung (FG) und der Fixierungsstellung (SI) in einer zu der Anordnungsrichtung (AR) nicht-parallelen, insbesondere orthogonalen, Verstellungsrichtung (VR) verstellbar ausgebildet ist, und/oder
- wobei der erste Leistungsverbinder (5) eine erste Kontaktfläche (14) und der zweite Leistungsverbinder (6) eine zweite Kontaktfläche (15) zur elektrischen Verbindung miteinander aufweisen, wobei der erste Leistungsverbinder (5) mit der ersten Kontaktfläche (14) nicht-orthogonal, insbesondere parallel, zu der Anordnungsrichtung (AR) ausgerichtet ist und wobei der zweite Leistungsverbinder (6) mit der zweiten Kontaktfläche (15) nicht-orthogonal, insbesondere parallel, zu der Anordnungsrichtung (AR) ausgerichtet ist.

9. Handgeführtes Bearbeitungsgerät (1) nach Anspruch 8,
- wobei der erste Leistungsverbinder (5) mit der ersten Kontaktfläche (14) derart ausgerichtet ist und wobei der zweite Leistungsverbinder (6) mit der zweiten Kontaktfläche (15) derart ausgerichtet ist, dass durch die Anordnung des ersten Gehäuseteils (8) und des zweiten Gehäuseteils (9) aneinander die erste Kontaktfläche (14) und die zweite Kontaktfläche (15) in einer zu der Anordnungsrichtung (AR) nicht-orthogonalen, insbesondere parallelen, Überlappungsrichtung (UR), insbesondere parallel zueinander, überlappen.

10. Handgeführtes Bearbeitungsgerät (1) nach einem der vorhergehenden Ansprüche,
- wobei der erste Leistungsverbinder (5) eine erste Kontaktzunge (16) aufweist, insbesondere eine erste Kontaktzunge (16) ist, und/oder
- wobei der zweite Leistungsverbinder (6) eine zweite Kontaktzunge (17) aufweist, insbesondere eine zweite Kontaktzunge (17) ist.

11. Handgeführtes Bearbeitungsgerät (1) nach einem der vorhergehenden Ansprüche, wobei das Bearbeitungsgerät (1) aufweist:
- ein Sensorsystem (40), wobei das Sensorsystem (40) ein erstes Sensorteil (41) und ein zweites Sensorteil (42) aufweist, wobei das erste Sensorteil (41) mindestens einen ersten Sensorverbinder (43) aufweist und wobei das zweite Systemteil (42) mindestens einen zweiten Sensorverbinder (44) aufweist, wobei der erste Sensorverbinder (43) und der zweite Sensorverbinder (44) zur elektrischen Verbindung miteinander zur Übertragung eines elektrischen Sensorsignals ausgebildet sind,
- wobei das erste Gehäuseteil (8) und das erste Sensorteil (41) miteinander mechanisch verbunden sind und wobei das zweite Gehäuseteil (9) und das zweite Sensorteil (42) miteinander mechanisch verbunden sind, wobei das erste Gehäuseteil (8) mit dem mechanisch verbundenen ersten Sensorteil (41) und das zweite Gehäuseteil (9) mit dem mechanisch verbundenen zweiten Sensorteil (42) zur mechanischen Verbindung miteinander zur Anordnung des Sensorsystems (40) in dem Gerätegehäuse (7) ausgebildet sind, und
- wobei der erste Sensorverbinder (43) in Bezug auf das erste Gehäuseteil (8) derart festgehalten ist und wobei der zweite Sensorverbinder (44) in Bezug auf das zweite Gehäuseteil (9) derart festgehalten ist, dass durch die Anordnung des ersten Gehäuseteils (8) mit dem mechanisch verbundenen ersten Sensorteil (41) und des zweiten Gehäuseteils (9) mit dem mechanisch verbundenen zweiten Sensorteil (42) aneinander zur mechanischen Verbindung miteinander der erste Sensorverbinder (43) und der zweite Sensorverbinder (44) beieinander angeordnet sind.

12. Handgeführtes Bearbeitungsgerät (1) nach einem der vorhergehenden Ansprüche, insbesondere nach Anspruch 11,
- wobei das erste Leistungsteil (3) einen Elektromotor (18) aufweist, und/oder
- wobei das zweite Leistungsteil (4) eine Motorsteuerungselektronik (19) und/oder eine Leistungselektronik (20), insbesondere einen Umrichter (21) und/oder mindestens einen Leistungsschalter (22), insbesondere einen Leistungstransistor (23), und/oder eine Leistungsquellenschnittstelle (24), insbesondere eine Akkuschnittstelle (25), zur elektrischen Verbindung mit einer Leistungsquelle (26), insbesondere eines Akkupacks (27), zur Versorgung des Bearbeitungsgeräts (1) mit elektrischer Antriebsleistung aufweist, und/oder
- wobei das erste Sensorteil (41) ein Sensorelement (45) zur Aufnahme einer Messgröße aufweist, und/oder
- wobei das zweite Sensorteil (42) eine Sensorelektronik (46) zur Verarbeitung eines elektrischen Sensorsignals aufweist.

13. Handgeführtes Bearbeitungsgerät (1) nach einem der vorhergehenden Ansprüche,
- wobei das erste Gehäuseteil (8) zu minimal 50 %, insbesondere 100 %, aus Metall (ME) besteht, und/oder
- wobei das zweite Gehäuseteil (9) zu minimal 50 %, insbesondere 100 %, aus Kunststoff (KS) besteht.

14. Handgeführtes Bearbeitungsgerät (1) nach einem der vorhergehenden Ansprüche,
- wobei das erste Gehäuseteil (8) und das zweite Gehäuseteil (9) zu der Anordnung aneinander in einer zu einer Längsachse (LA) des Bearbeitungsgeräts (1) nicht-parallelen, insbesondere orthogonalen, Anordnungsrichtung (AR) ausgebildet sind.

15. Verfahren zur Herstellung eines handgeführten Bearbeitungsgeräts (1) nach einem der vorhergehenden Ansprüche, wobei das Verfahren die Schritte aufweist:
a) Anordnen des ersten Gehäuseteils (8) mit dem mechanisch verbundenen ersten Leistungsteil (3) und des zweiten Gehäuseteils (9) mit dem mechanisch verbundenen zweiten Leistungsteil (4) aneinander, und
b) Verstellen des Fixierungselements (10) zwischen der Freigabestellung (FG) und der Fixierungsstellung (SI).
